# EUROPEAN PATENT APPLICATION

(11) **EP 2 058 555 A1**
(43) Date of publication of application: **13.05.2009**
(21) Application number: 07806179.3
(22) Date of filing: 22.08.2007
(51) Int. Cl.: F16G 5/16

(54) **POWER TRANSMISSION BELT AND METHOD OF ASSEMBLING THE SAME**

(30) Priority: 28.08.2006 JP 2006231268
(71) Applicant: Toyota Jidosha Kabushiki Kaisha, Toyota-shi, Aichi 471-8571 (JP)
(72) Inventor: KOBAYASHI, Daisuke, Toyota-shi, Aichi; 471-8571 (JP)
(74) Representative: TBK-Patent
(86) International application number: PCT/JP2007/066702
(87) International publication number: WO 2008/026613

(57) **Abstract**

A driving belt and method of assembling the same, which can fit a ring with elements easily, and which can prevent detachment of the ring from the elements. In a driving belt V, an endless ring 8 is accommodated in a recess 7 of elements 1 arranged annularly in a manner to situate the recess 7 to open to an outer circumferential side, and the elements 1 are interlinked pivotally with respect to an opposed face of an adjoining element 1.

## Description

### TECHNICAL FIELD

This invention relates to a driving belt, in which a plurality of plate elements interlinked with one another in a circular manner is fastened by an endless annular ring, and to an assembling method thereof.

### BACKGROUND ART

In the prior art, a geared transmission capable of changing a gear stage thereof stepwise, and a continuously variable transmission capable of varying a speed change ratio steplessly are available as a transmission mechanism for transmitting power between rotary members. For example, a belt-type continuously variable transmission and a toroidal-type continuously variable transmission are known as the continuously variable transmission. Specifically, the belt-type continuously variable transmission is a transmission varying a speed change ratio continuously using a pair of drive pulleys and a pair of driven pulleys, and a driving belt applied to those pulleys. The known endless driving belt used in such belt-type continuously variable transmission is prepared by arranging a plurality of plate members called an "element" or a "block" in a circular manner while connecting the plate members with one another, and fastening the interlinked plate members by an annular belt called a "band" or a "carrier".

When the driving belt of this kind applied to the drive and driven pulleys is driven by driving the drive pulley a frictional force acts on a contact portion between the element and the drive pulley, and a compressive force is applied to the elements in the arranging direction thereof, i.e., in the thickness direction thereof according to a torque of the drive pulley. The compressive force applied to the element being contacted with the drive pulley is transmitted to the element being contacted with the driven pulley via the elements existing between the drive and driven pulleys. When the compressive force is transmitted to the element being contacted with the driven pulley, a frictional force is generated at the contact portion between the element and the driven pulley, and a torque to rotate the driven pulley is established according to the transmitted compressive force. The power is thus transmitted between the drive and driven pulley through the driving belt.

One example of above-explained driving belt is disclosed in Japanese Patent Laid-Open No. 2000-249195. The "High-Loaded Transmission Belt" taught by Japanese Patent Laid-Open No. 2000-249195 is composed of a center belt and blocks reinforced against lateral pressure, and it is applied to a main prime mover and an auxiliary prime mover of automobiles and agricultural machineries. Specifically, the "High-Loaded Transmission Belt" comprises a block (i.e., an element) which is so constituted that two belt sides having lock parts in its top end are connected to each other in their bottom ends by a connecting member, and two rows of endless carriers (i.e., rings) fixedly fitted into an engagement groove opening between the lock parts. The belt side portion of the element is provided individually with a convex portion and a concave portion on each face so that the elements can interlink with one another. Therefore, the interlinked elements can be aligned even when the belt is running.

In addition to above, Japanese Patent Laid-Open No. 2001-193796 discloses an invention relating to "Element for Metal Belt and Metal Belt" for continuously variable transmissions of vehicles. The metal belt taught by Japanese Patent Laid-Open No. 2001-193796 comprises: a metal endless band (i.e., a ring) applied to annular grooves of a drive and a driven pulleys; a plurality of metal element composed of a body portion to be contacted with the annular groove of the pulley, a pair of pillars erected on the body portion and faced with each other, an engagement protruded portion formed on a leading end of the pillar, and an opening for inserting the band (i.e., a recessed portion) formed between the engagement protruded portions; and an endless metal falling preventing body somewhat wider than the band. The falling preventing body can be bent to narrow its width when it is inserted in between the engagement protruded portions to prevent falling of the band.

According to the transmission belt taught by Japanese Patent Laid-Open No. 2000-249195, the lock parts are formed on both belt sides of the element erected beside the carriers to hold the carriers on the element, and the convex portion and the concave portion are formed individually on an upper corner of each face of the belt sides to interlink adjoining elements. That is, the convex portion and concave portion functioning as male and female connections are formed symmetrically on both upper corner of the element. The carriers are individually fitted into each engagement groove and held by the lock part so that two rows of the belts are held in the element.

According to the transmission belt of Japanese Patent Laid-Open No. 2000-249195 thus structured, the carriers arranged parallel to each other have to be overlapped partially when fitted onto the elements or dismounted from the elements. That is, a total width of the carriers arranged parallel to each other have to be reduced narrower than the opening width between the lock parts of the element when the carriers are fitted onto the elements or dismounted from the elements, by twisting the carriers to overlap partially.

In order to twist the carriers being arranged parallel to each other thereby overlapping those carriers partially, it is necessary to swing the interlinked elements, that is, to pivot the elements relatively with each other. However, according to the transmission belt taught by Japanese Patent Laid-Open No. 2000-249195, the convex portion and the concave portion for interlinking adjoining elements are formed on both upper corners of the element. Accordingly, lateral movement of the element has to be restricted. This makes difficult to overlap the carriers arranged parallel to each other when assembling the transmission belt.

On the other hand, according to the metal belt taught by Japanese Patent Laid-Open No. 2001-193796, the engagement protruded portions are formed on the pillars erected on both side ends, and the plurality of elements interlinked in a circular manner are fastened by the band whose width is narrower than the clearance between the engagement protruded portions. Therefore, the band can be fitted onto the element easily from the clearance between the engagement protruded portions, however, the falling preventing body have to be provided separately to prevent detachment of the band from the element.

### DISCLOSURE OF THE INVENTION

The present invention has been conceived noting the technical problems thus far described, and its object is to provide a driving belt in which a ring can be fitted onto elements easily and which can prevent detachment of the ring from the elements, and an assembling method thereof.

In order to achieve the above-mentioned object, according to the present invention, there is provided a driving belt, in which a plurality of elements is arranged annularly in a manner to situate a recess thereof to open to an outer circumferential side, and in which an endless ring is accommodated and held in the recess of the elements, characterized in that: the elements are individually interlinked pivotally with respect to an opposed face of an adjoining element.

An opening width of the recess of the element is narrower than a total width of the ring, and a width of a bottom side of the recess is wider than the total width of the ring.

In addition to above, the element comprises a male connection protruding toward an adjoining element on one of the faces thereof being opposed to the adjoining element, and a female connection into which the male connection is fitted loosely on a face opposite to the face where the male connection is formed. That is, each of the elements is interlinked pivotally with both of the adjoining elements through the male and female connections.

According to the invention, the male connection and the female connection are respectively formed at one spot of the face where the male connection and the female connection are respectively formed.

Specifically, the male and female connections are respectively formed on a width center of the face where the male and female connections are respectively formed.

In addition to above, the element comprises protruding portions for holding the ring to prevent detachment of the ring. The protruding portions protrude toward a width center of the element from outer circumferential side of inner walls of the recess, and a clearance between end faces of the protruding portions is narrower than the width of the ring.

In addition to above, the ring comprises an outer layer, which is laid on an outer face thereof in the recess, and which is disposed between the protruding portions.

According to the invention, two rows of the rings are aligned parallel to each other in the recess.

According to another aspect of the invention, there is provided an assembling method of a driving belt, in which a plurality of elements is arranged annularly in a manner to situate a recess thereof to open to an outer circumferential side, and two rows of endless rings are accommodated and held in the recess of elements, comprising: twisting the two rows of rings to overlap the rings partially while keeping remaining portion of the rings parallel to each other; fitting the overlapped portion of the two rows of rings into the recess of the element; and thereafter moving the element to the portion where the rings are kept parallel to each other to accommodate the rings aligned parallel to each other in the recess.

A width of the overlapped portion of the two rows of rings is narrowed narrower than an opening width of the recess, and a total width of the remaining portion of the rings aligned parallel to each other is kept wider than the opening width of the recess but narrower than a bottom width of the recess.

In addition to above, according to the assembling method of the invention, the two rows of rings aligned parallel to each other are overlapped partially by a pivotal movement of the element accommodating the rings in its recess with respect to the adjoining element.

According to the invention, the elements are thus interlinked pivotally with the adjoining elements, and the interlinked elements are fastened by the endless ring. Therefore, the interlinked elements can be fastened easily by fitting the ring into the recess of the element while swinging the elements.

In addition to the above advantage, according to the invention, the opening width of the recess of the element is narrower than the total width of the ring, and the bottom width of the recess is wider than the total width of the ring. Therefore, the ring can be inserted easily into the recess of the element, and the element can be fastened certainly by the ring.

As explained above, the male and female connections are formed individually on each face of the element being opposed to an adjoining element, and the elements are interlinked by joining the male and female connections while keeping a predetermined clearance. Therefore, the elements interlinked in a circular manner can be positioned accurately, and the elements can pivot relatively.

In addition to the above advantage, the male and female connections are respectively formed at one spot of the face where the male connection and female connections are respectively formed. Therefore, the elements being interlinked in a circular manner can be positioned accurately, and the elements can pivot easily around the connected male and female connections.

More specifically, both of the male connection and female connection formed respectively on each face of the element being opposed to the adjoining element are situated on a substantially intermediate portion of the element in the width direction. Therefore, the elements interlinked in a circular manner can be positioned accurately, and the each element is allowed to pivot equally in the width direction thereof around the joined male and female connections situated on the width center thereof.

According to the invention, the opening width of the recess, that is, the distance between leading ends of the protruding portions protruding toward the width center of the element from the outer circumferential side of inner walls of the recess is narrower than the total width of the ring. Therefore, the ring can be held certainly in the recess and detachment of the ring from the elements is thereby prevented.

In addition to the above advantage, according to the invention, an outer layer can be formed between the protruding portions on the outer face of the ring accommodated in the recess of the element. Therefore, a thickness of the ring can be increased to enhance the strength of the driving belt while utilizing the space between the protruding portions efficiently.

In addition to the above advantage, two rows of rings are accommodated parallel to each other in the recess of the element, and the total width of the rings can be narrowed when the rings are fitted into the recess of the element. That is, the two rows of rings are overlapped partially on each other to reduce the total width thereof by twisting the rings by a pivotal movement of the element. As a result, the rings can be fitted easily into the recess of the element from the overlapped portion.

As explained above, the two rows of rings are fitted into the recess, those rings are twisted to be overlapped partially to reduce the total width thereof at the overlapped portion. Specifically, the rings are inserted into the recess from the overlapped portion where the total width thereof is reduced, and then, the element is moved in the length direction of the rings to the portion where the rings are aligned parallel to each other. As a result, two rows of rings are accommodated in the recess while being aligned parallel to each other. Thus, according to the invention, the rings can be accommodated easily in the recess of the element.

The total width of the overlapped portion of the rings is narrowed narrower than the opening width of the recess of the element. On the other hand, the total width of the rings at the portion where the rings are aligned parallel to each other is wider than the opening width of the recess of the element but narrower than the bottom width of the recess. Therefore, the overlapped portion of the two rows of rings can be fitted into the recess of the element easily from the opening of the recess to the bottom of the recess. The element holding overlapped portion of the rings in its recess is thereafter moved to the portion of the rings where the rings are aligned parallel to each other. As a result, the rings are accommodated easily in the recess of the element.

Further, according to the invention, when fitting the two rows of rings into the recess of the element sequentially, the portions of the rings which have already been accommodated in the recess of the element can be twisted by a pivotal movement of the element accommodating the rings in its recess. As a result, the rings accommodated in the recess of the element are overlapped partially. Therefore, the remaining portion of the rings to be accommodated in the recess of the element can be fitted into the recess easily and sequentially.

### BRIEF DESCRIPTION OF THE DRAWINGS

Fig. 1 is a front view schematically showing a first example of the driving belt of the invention.
Fig. 2 is a side sectional view schematically showing a section of the driving belt of the first example.
Fig. 3 is a view schematically showing a pivotal movement of the elements constituting the driving belt of the first example.
Fig. 4 is a view schematically showing an overlapped portion of the rings and a remaining portion of the rings aligned parallel to each other.
Fig. 5 is a front view schematically showing a second example of the driving belt of the invention.
Fig. 6 is a view schematically showing a pivotal movement of the elements constituting the driving belt of the second example.
Fig. 7 is a front view schematically showing a third example of the driving belt of the invention.
Fig. 8 is a front view schematically showing a modified example of the driving belt according to the third example.

### BEST MODE FOR CARRYING OUT THE INVENTION

Next, this invention will be explained with reference to the accompanying drawings. First of all, first to third examples will be explained sequentially, and then, an assembling method of the driving belt of the invention will be explained.

### (First Example)

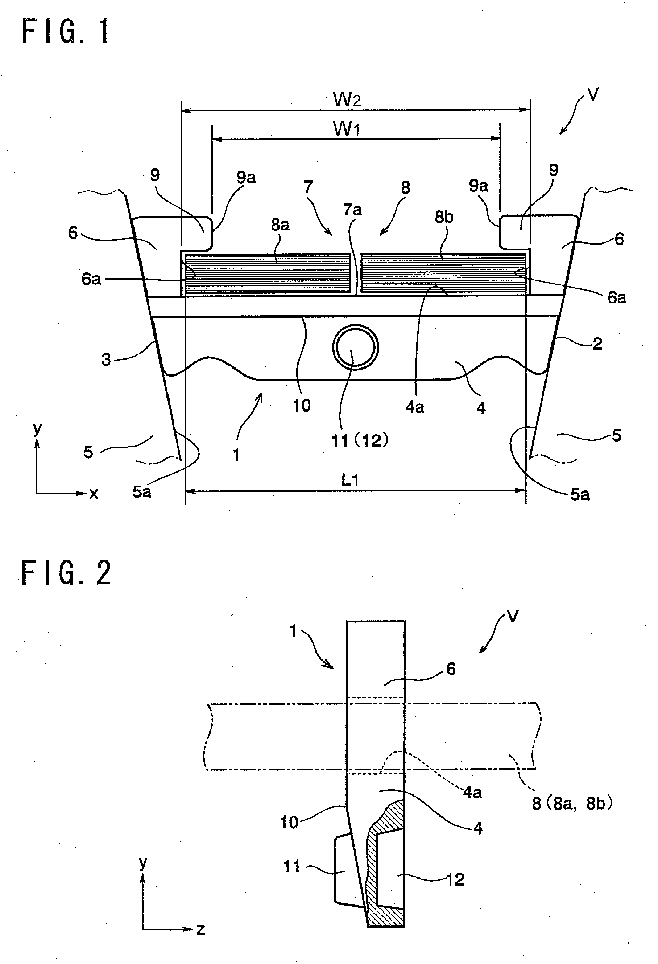

Here will be explained configurations of an element and a ring constituting a driving belt of the first example with reference to Figs. 1 and 2. Fig. 1 shows an example of a driving belt V to be applied to a drive pulley (i.e., an input shaft side pulley) and a driven pulley (i.e., an output shaft side pulley) of a belt type continuously variable transmission so as to transmit a power between those pulleys. An element 1 is a metal plate member comprising a base portion (or main body) 4. Both lateral faces 2 and 3 of the base portion 4, that is, both lateral ends (in the direction of x-axis in Fig. 1) of the base portion 4 are inclined. The inclined lateral faces 2 and 3 are frictionally contacted with a V-shaped groove of a drive or driven pulley 5 of the belt type continuously variable transmission to transmit a torque.

The base portion 4 comprises columns 6 erected vertically (in the direction of y-axis in Figs. 1 and 2) at both lateral ends (in the direction of x-axis in Fig. 1) thereof. Accordingly, a recess 7 is formed by an upper face (or a top edge) 4a of the base portion 4 and both inner walls 6a of the columns 6 facing to the center of the base portion 4. Thus, the recess 7 opens upwardly, in other words, the recess 7 opens toward an outer circumference of the driving belt V

Specifically, the recess 7 is a space for accommodating an endless ring 8 for fastening the elements 1 interlinked closely with one another in a circular manner. That is, the upper face 4a functions as a saddle face 4a onto which an inner circumferential face of the ring 8 is fitted.

The ring 8 is a layered ring made of metal comprising a plurality of annular belt-like layers overlapped in a circumferential direction. According to the first example, two rings 8a and 8b are arranged parallel to each other in the recess 7. Here, a configuration, dimensions, material, strength and so on of the rings 8a and 8b are identical to each other.

The element 1 comprises protruding portions 9. Each protruding portion 9 is formed integrally with the column 6 and protrudes toward a width center of the base portion 4 from an outer circumferential side of the columns 6, that is, both end faces 9a of the protruding portions 9 are faced inwardly to be opposed to each other. In other words, the protruding portion 9 is formed on both opening ends of the recess 7 above lateral ends of the ring 8a and 8b, i.e., on the end portions of the inner walls 6a, and both of the protruding portions 9 protrude toward a width center of the recess 7 (i.e., in the direction of x-axis in Fig. 1). Thus, a distance between the end faces 9a being opposed to each other is an opening width of the recess 7, and such distance between the end faces 9a is represented by W1 in Fig. 1. On the other hand, a width W2 at a bottom portion 7a of the recess 7, that is, a distance between the inner walls 6a is wider than the opening width W1, as shown in Fig. 1.

The elements 1 are interlinked with one another in a circular manner and fastened by the ring 8. The elements 1 thus fastened by the ring 8 is applied to the drive and driven pulleys 5. In case the driving belt V is applied to the pulleys 5, clearances between the elements 1 are narrowed gradually toward a rotational center of the pulleys 5 in a region where the elements 1 are contacted with the pulleys 5, and the elements 1 are eventually contacted with one another at its portion close to the rotational center of the pulley 5. For this reason, a thickness of the element 1 has to be thinned at its lower portion, that is, at the portion close to the rotational center of the pulley 5, as illustrated in Fig. 2.

According to the example shown in Fig. 2, one of the faces of the base portion 4 i.e., the left face in Fig. 2 is thinned gradually from a predetermined portion below the saddle face 4a. In case the belt V is being applied to the pulleys 5, the elements 1 are contacted with the adjoining element 1 at the portion where the thickness thereof is gradually reduced, in the region where the elements 1 are contacted with the pulley 5, in other words, in a curving region of the belt V That is, an edge of a boundary of thickness functions as a rocking edge 10.

A male connection 11 and a female connection 12 are respectively formed on each face of the base portion 4 being opposed to the adjoining element 1, at the center of width of the element 1. Specifically, as shown in Fig. 2, the male connection 11 of circular truncated cone is formed on one of the faces of the base portion 4 where the rocking edge 10 is formed. On the other hand, the bottomed cylindrical female connection 12 to which the adjoining male connection 11 is inserted loosely is formed on a face opposite to the face on which the male connection 11 is formed. Therefore, the elements 1 can be kept in line within a straight region of the belt V where the element 1 is not being contacted with the pulley 5.

That is, a relative position of the elements 1 within the straight region of the driving belt V can be determined in both vertical and horizontal directions in Fig. 1 by joining the male and female connections 11 and 12. For this reason, chattering of the driving belt V is prevented so that the belt V can be driven smoothly when the belt-type continuously variable transmission is driven.

As explained above, a main objective of the present invention is to simplify an assembly of the elements 1 and the ring 8 of the driving belt V For this purpose, the recess 7 is formed on the outer circumferential side of the element 1, and the protruding portions 9 protruding toward the width center of the recess 7 are formed on the outer circumferential side of both of the inner walls of the columns 6. Also, the male connection 11 protruding toward the adjoining element 1 is formed on one of the faces of the element 1 being opposed to the adjoining element 1, and the female connection 12 into which the male connection is inserted loosely is formed on the face of the element 1 opposite to the face on which the male connection 11 is formed. More specifically, the male connection 11 and the female connection 12 are respectively formed at one spot of the face where the male and female connections 11 and 12 are respectively formed, at the center of width of the element 1.

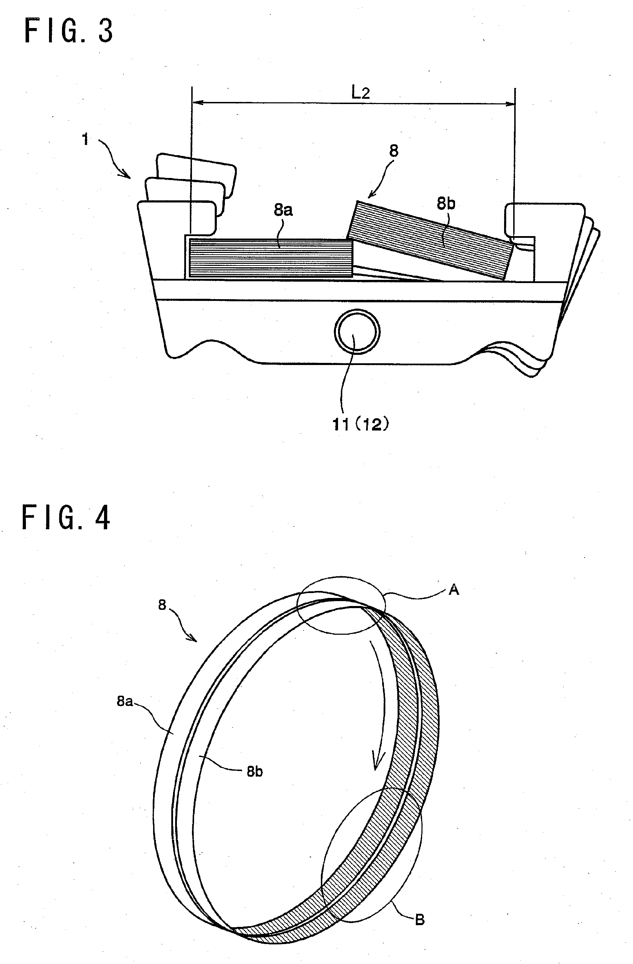

Since only one male connection 11 and one female connection 12 are respectively formed on each face of the element 1 at the width center of the element 1, and those male and female connections 11 and 12 are individually joined with the adjoining male or female connection 11 or 12, the elements 1 interlinked in a circular manner can swing relatively with each other, in other words, the interlinked elements 1 can pivot relatively with each other, as shown in Fig. 3.

As mentioned above, the ring 8 comprises two rings 8a and 8b in this example. Therefore, as shown in Fig. 4, the rings 8a and 8b can be overlapped partially (as shown in a circle A in Fig. 4) while keeping the remaining portion of the rings 8a and 8b parallel to each other (as shown in a circle B in Fig. 4).

According to the conventional driving belt, high degree of freedom of rings aligned parallel to each other is still ensured at an initial stage in which a number of elements holding those rings is relatively small so that those rings can be twisted easily to be overlapped partially. However, as the number of the element holding those rings increases, for example, at a stage in which more than half round of the rings are held by the elements, a twisting movement of the rings has to be restricted. On the other hand, according to the invention, the elements 1 of the driving belt V are interlinked to the adjoining elements 1 in a circular manner being pivotable relative to each other. Therefore, the ring 8 can be twisted easily to be overlapped partially by a pivotal movement of the element 1 even at a stage in which relatively large number of elements 1 are holding the rings 8a and 8b.

As shown in Fig. 1, a width L1 of the ring 8, i.e., a total width of the rings 8a and 8b aligned parallel to each other is wider than the aforementioned opening width W1 but narrower than the width W2. However, as indicated by L2 in Fig. 3, the total width of the ring 8 can be reduced partially narrower than the opening width W1 by overlapping the rings 8a and 8b partially.

More specifically, according to the element 1 and the ring 8 of the invention, the opening width W1 of the recess 7 is narrower than the width L1 of the ring 8, and the width W2 of the recess 7 is wider than the width L1 of the ring 8. In other words, the width L2 of the overlapped rings 8a and 8b is narrower than the opening width W1 of the recess 7, and the width L1 of the rings 8a and 8b aligned parallel to each other is wider than the opening width W1 of the recess 7 but narrower than the width W2 of the recess 7.

Therefore, the ring 8 can be fitted into the recess 7 from the overlapped portion of the rings 8a and 8b through the clearance between the end faces 9a. After the overlapped portion of the rings 8a and 8b is thus fitted into the recess 7 from the clearance between the end faces 9a, the element 1 holding the overlapped portion of the rings 8a and 8b in its recess 7 is moved to the portion where the rings 8a and 8b are aligned parallel to each other so that the rings 8a and 8b can be accommodated in the recess 7 firmly while being aligned parallel to each other. Alternatively, it is also possible to align the partially overlapped rings 8a and 8b parallel to each other again in the recess 7. As a result, the rings 8a and 8b can be held in the recess 7 while being aligned parallel to each other, and disengagement of the ring 8 from the element 1 is thereby prevented. Thus, according to the invention, the ring 8 can be accommodated in the recess 7 of the element 1 easily and certainly.

### (Second Example)

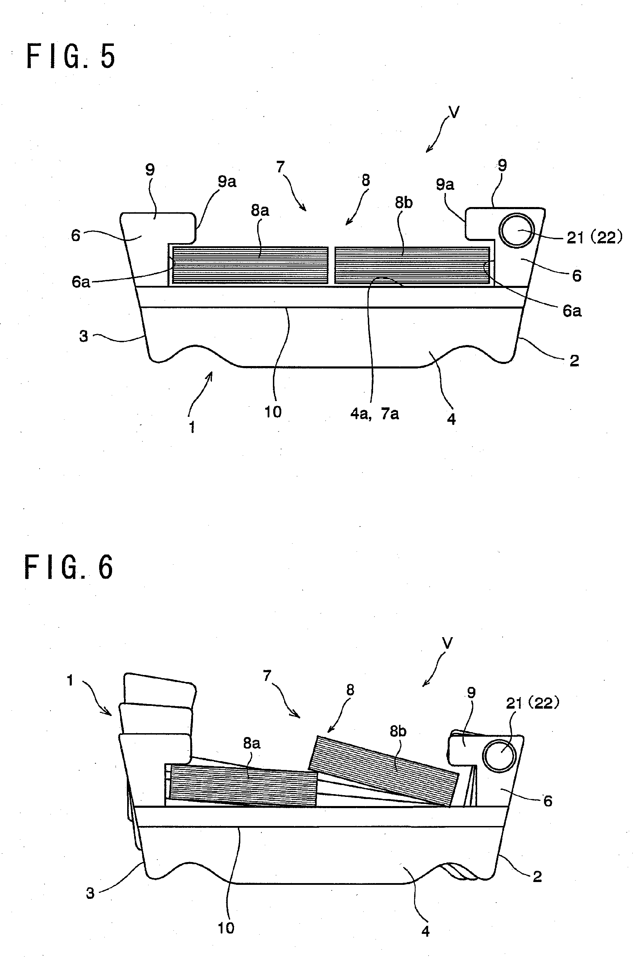

Here will be explained the second example of the element and the ring of the driving belt with reference to Figs. 5 and 6. According to the above-explained first example, the male and female connections 11 and 12 are formed respectively on the center of width of the base portion 4. On the other hand, according to the second example to be described, the male and female connections are formed on a portion other than the center of width of the base portion 4 of the element 1. The remaining elements of the second example are identical to those of the first example shown in Figs. 1 and 2, so further explanation of the elements in common with the first example will be omitted by allotting common reference numerals.

In the example shown in Figs. 5 and 6, one male connection and one female connection which are structurally identical to those of the first example are individually formed on each flat face of one of the column 6 (i.e., on the right column in Fig. 5) being opposed to the adjoining element 1.

Specifically, a male connection 21 of circular truncated cone is formed on one of the faces of the column 6 being opposed to the adjoining element 1, i.e., on the face of the rocking edge 10 side. On the other hand, the bottomed cylindrical female connection 22 into which the adjoining male connection 21 is inserted loosely is formed on a face of the column 6 opposite to the face on which the male connection 21 is formed. As the first example, only one male connection 21 and one female connection 22 are respectively formed on each flat face of one of the column 6.

Since only one male connection 21 and female connection 22 are respectively formed on each flat face of one of the columns 6 being opposed to the adjoining element 1 and those male and female connections 21 and 22 are individually joined with the adjoining male or female connection 21 or 22, the elements 1 interlinked in a circular manner can swing relatively with each other, in other words, the interlinked elements 1 can pivot with respect to each other, as shown in Fig. 6.

### (Third Example)

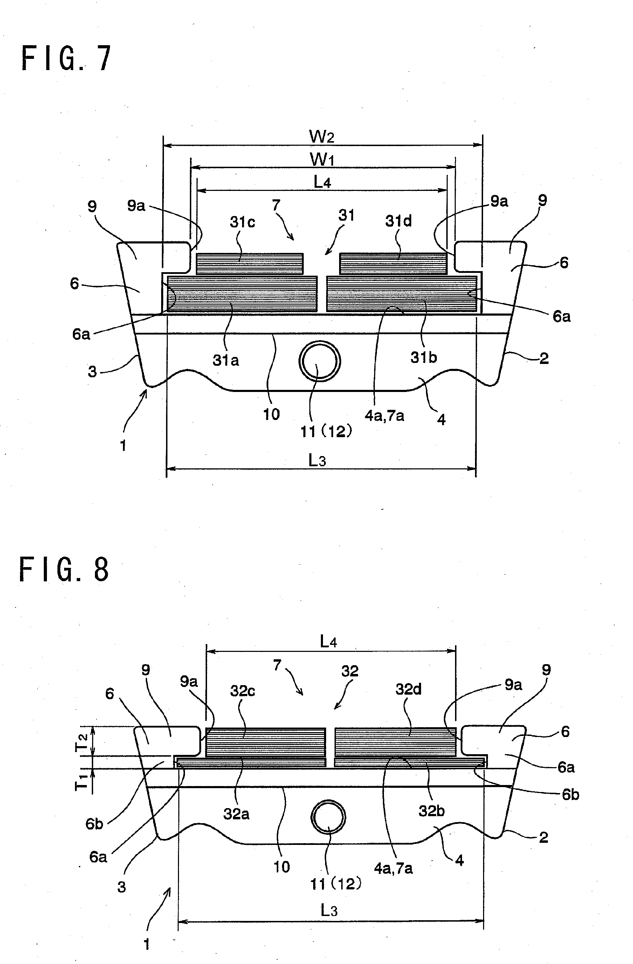

Here will be explained a third example of the element and the ring of the driving belt with reference to Figs. 7 and 8. According to the previously described first example, the width of both rings 8a and 8b constituting the ring 8 is entirely constant. On the other hand, according to the third example, the ring also comprises two rings but each ring comprises two layers of different widths. Specifically, the width of both inner rings is constant entirely, and a width of each outer ring is also constant entirely but narrower than that of the inner ring. The remaining elements of the third example are identical to those of the first example shown in Figs. 1 and 2, so further explanation of the elements in common with those in the first example will be omitted by allotting common reference numerals.

In the example shown in Fig. 7, two lines of rings 31a and 31b are used to constitute a ring 31 instead of the rings 8a and 8b of the first example. As shown in Fig. 7, outer rings 31c and 31d are individually formed on the rings 31a and 31b, and widths of the outer rings 31c and 31d are narrower than those of the rings 31a and 31b.

Specifically, as the rings 8a and 8b of the first example, widths of the rings 31a and 31b are entirely constant, and those rings 31a and 31b are aligned parallel to each other. As described above, the outer rings 31c and 31d are individually formed on outer circumferential faces of the rings 31a and 31b, and a total width of the outer rings 31c and 31d is narrower than the opening width W1.

More specifically, as shown in Fig. 7, a width L3 of the ring 31, that is, a total width of rings 31a and 31b aligned parallel to each other is wider than the opening width W1 but narrower than the width W2. On the other hand, a width L4, i.e., a total width of the outer rings 31c and 31d is narrower than the opening width W1. In addition to above, the rings 31a and 31b are individually designed to have a width thereof which can make the total maximum width of the ring 31 narrower than the opening width W1 when overlapped partially.

Therefore, the ring 31 can be fitted into the recess 7 from the clearance between the end faces 9a by overlapping the rings 31a and 31b partially. After the overlapped portion of the rings 31a and 31b is thus fitted into the recess 7 from the clearance between the end faces 9a, the element 1 holding the overlapped portion of the rings 31a and 31b in its recess 7 is moved to the portion where the rings 31a and 31b are aligned parallel to each other so that the rings 31a and 31b can be accommodated in the recess 7 firmly while being aligned parallel to each other. Alternatively it is also possible to align the partially overlapped rings 31a and 31b parallel to each other again in the recess 7. As a result, the rings 31a and 31b aligned parallel to each other can be held in the recess 7 and detachment of the ring 31 from the element 1 is thereby prevented. Thus, according to the invention, the ring 31 can be accommodated in the recess 7 of the element 1 easily and certainly.

In addition to the above-mentioned advantage, according to the example shown in Fig. 7, strength of the ring 31 can be enhanced by forming the outer rings 31c and 31d individually on the rings 31a and 31b to increase a thickness of the ring 31 within the clearance between the end faces 9a, without degrading easiness of fitting the ring 31 into the recess 7 of the element 1.

For example, strength of the ring 8 of the driving belt V shown in Fig. 1 can be enhanced by forming additional outer rings 31c and 31d individually on the rings 8a and 8b utilizing the space between the end faces 9a efficiently. In addition, a torque capacity of the driving belt V can also be increased without changing the design of the element 1.

Fig. 8 shows a modified example of the third example. As the ring 31 shown in Fig. 7, a ring 32 also comprises two lines of rings 32a and 32b, and outer rings 32c and 32d narrower than the rings 32a and 32b are formed individually on the rings 32a and 32b.

Specifically, widths of the rings 32a and 32b are entirely constant, and those rings 32a and 32b are aligned parallel to each other. As described above, the outer rings 32c and 32d are individually formed on outer circumferential faces of the rings 32a and 32b, and a total width of the outer rings 32c and 32d is narrower than the opening width W1, that is, narrower than the clearance between the protruding portions 9.

According to the ring 32 shown in Fig. 8, a thickness T2 of the ring 32c or 32d is thicker than a thickness T1 of the ring 32a or 32b. In other words, the thickness T1 of the ring 32a or 32b is thinned as much as possible within an allowable range not to degrade the strength and function of the ring 32. In connection with such reduced thickness of the rings 32a and 32b, a height 6b of the column 6, in other words, a height of the recess 7 of the element 1 where the rings 32a and 32b are to be accommodated is also shortened as much as possible.

Thus, according to the example shown in Fig. 8, the thickness T1 of the ring 32a or 32b is thinned as much as possible, and the height 6b of the column 6 for accommodating the ring 32a or 32b is shortened as much as possible. For this reason, a weight and a moment of inertia of the element 1 can be reduced. That is, a load on the belt 32 resulting from the inertia moment of the element 1 when driving the driving belt V is lightened. As a result, durability of the ring 32, i.e., the driving belt V is improved.

### (Example of Assembly)

Here will be explained a procedural example of an assembling work of the driving belt V with reference to Figs. 1 to 4. First of all, the rings 8a and 8b aligned parallel to each other are overlapped at a predetermined portion in the length direction thereof. As shown in Fig. 4, when the rings 8a and 8b are overlapped partially, a remaining portion of the rings 8a and 8b are kept parallel to each other. The width L2 of the ring 8 thus narrowed by overlapping the rings 8a and 8b partially is narrower than the opening width W1 of the element 1, as shown in Fig. 3. Therefore, the ring 8 can be fitted into the recess 7 of the element1 from the overlapped portion. Alternatively, the ring 8 can also be fitted into a plurality of the recesses 7 at the same time by arranging predetermined pieces of the elements 1 in advance.

Then, the element(s) 1 accommodating the overlapped portion of the rings 8a and 8b in its recess(es) 7 is/are moved in the length direction of the ring 8 to the portion where the rings 8a and 8b are aligned parallel to each other. As described above, the width L1 of the rings 8a and 8b aligned parallel to each other is narrower than the width W2 of the recess 7 of the element 1 but wider than the opening width W1 of the element 1. Therefore, when the element 1 accommodating the overlapped portion of the rings 8a and 8b in the recess 7 is moved to the portion where the rings 8a and 8b are aligned parallel to each other, the rings 8a and 8b are held firmly in the recess 7 by the protruding portions 9. As a result, the rings 8a and 8b are accommodated properly in the recess 7 of the element 1 while being aligned parallel to each other.

The above-explained routine of fitting the ring 8 into the recess(es) 7, and moving the element(s) 1 to the portion where the rings 8a and 8b are aligned parallel to each other is repeated sequentially.

As described above, the rings 8a and 8b can be moved freely at an initial phase of the above-mentioned routine of fitting the ring 8 into the recess 7 of the element 1 so that the rings 8a and 8b can be overlapped comparatively easily. However, the movements of the rings 8a and 8b are to be restricted eventually with the increase of the number of the first element 1a being interlinked through the male and female connections 11 and 12 and holding the rings 8a and 8b. That is, the rings 8a and 8b become difficult to be overlapped eventually. According to the invention, however, the rings 8a and 8b still can be twisted even at this stage by a pivotal movement of the element 1 being interlinked with one another and accommodating the ring 8 in the recess 7, which is archived by applying an external force to the element 1 by a predetermined method.

When the ring 8 is fitted into the recess 7 of all of scheduled pieces of the elements 1, the external force to pivot the element 1 is released so that the pivoted element 1 is balanced again and the overlapped rings 8a and 8b are thereby returned to be parallel to each other. As a result, the rings 8a and 8b constituting the ring 8 are entirely aligned parallel to each other in the recesses 7 of the interlinked elements 1, and the assembly of the driving belt V is completed.

Thus, according to the assembling method of the driving belt V of the present invention, the rings 8a and 8b aligned parallel to each other are twisted to be overlapped partially when fitted into the recess(es) 7 of the element(s) 1. As a result, the width L2 of the overlapped portion of the rings 8a and 8b is reduced narrower than the width L1 of the portion of the ring 8 where the rings 8a and 8b are aligned parallel to each other. The overlapped portion of the rings 8a and 8b is then fitted into the recess(es) 7 of the element(s) 1, and the element(s) 1 is/are then moved in the length direction of the ring 8 to the portion where the rings 8a and 8b are aligned parallel to each other. As a result, the rings 8a and 8b are accommodated in the recess of the element 1 properly while being aligned parallel to each other. According to the assembling method of the invention, therefore, the ring 8 can be fitted easily into the recess 7 of the element 1. For this reason, the assembling work of the driving belt V can be carried out easily.

In addition to above, according to the assembling method of the invention, the ring 8 can be fitted into the recess 7 of the element 1 easily even at the stage in which the ring 8 is fitted into relatively large number of the recess 7 of the elements 1, by twisting the rings 8a and 8b to overlap those rings partially by applying an external force to the elements 1 interlinked through the male and female connections 11 and 12 to pivot the elements 1.

Further, the ring 8 can also be dismounted easily from the interlinked elements 1 even after the completion of assembly of the driving belt V by twisting the rings 8a and 8b to overlap those rings partially by a pivotal movement of the interlinked elements 1.

Here, the present invention should not be limited to the aforementioned example. That is, although the examples of the present invention thus far describe relate to the driving belt used in a belt type continuously variable transmission, the present invention can also be applied to a driving belt to be applied to another kind of transmission mechanism composed mainly of a belt and pulleys.

## Claims

1. A driving belt, in which a plurality of elements is arranged annularly in a manner to situate a recess thereof to open to an outer circumferential side, and in which an endless ring is accommodated and held in the recess of the elements,
**characterized in that**:
the elements are individually interlinked pivotally with respect to an opposed face of an adjoining element.

2. The driving belt as claimed in claim 1, wherein:
an opening width of the recess of the element is narrower than a total width of the ring; and
a width of a bottom side of the recess is wider than the total width of the ring.

3. The driving belt as claimed in claim 1 or 2, wherein:
the element comprises a male connection protruding toward an adjoining element on one of the faces thereof being opposed to the adjoining element, and a female connection into which the male connection is fitted loosely on a face opposite to the face where the male connection is formed; and
each of the element is interlinked pivotally with the adjoining elements through the male and female connections.

4. The driving belt as claimed in claim 3, wherein:
the male connection and the female connection are respectively formed at one spot of the face where the male connection and the female connection are respectively formed.

5. The driving belt as claimed in claim 4, wherein:
the male and female connections are respectively formed on a width center of the face where the male and female connections are respectively formed.

6. The driving belt as claimed in any of claims 1 to 5, wherein:
the element comprises protruding portions for holding the ring to prevent detachment of the ring, which protrude toward a width center of the element from outer circumferential side of inner walls of the recess; and
a clearance between end faces of the protruding portions is narrower than the total width of the ring.

7. The driving belt as claimed in claim 6, wherein:
the ring comprises an outer layer, which is laid on an outer face of the ring in the recess, and which is disposed between the protruding portions.

8. The driving belt as claimed in any of claims 1 to 7, wherein:
two rows of the rings are aligned parallel to each other in the recess.

9. An assembling method of a driving belt, in which a plurality of elements is arranged annularly in a manner to situate a recess thereof to open to an outer circumferential side, and in which two rows of endless rings are accommodated and held in the recess of the elements, **characterized by** comprising:
twisting the two rows of rings to overlap the rings partially while keeping remaining portion of the rings parallel to each other;
fitting the overlapped portion of the two rows of rings into the recess of the element; and
thereafter moving the element to the portion where the rings are kept parallel to each other to accommodate the rings aligned parallel to each other in the recess.

10. The assembling method of a driving belt as claimed in claim 9, wherein:
a width of the overlapped portion of the two rows of rings is narrowed narrower than an opening width of the recess, and a total width of the remaining portion of the rings aligned parallel to each other is kept wider than the opening width of the recess but narrower than a bottom width of the recess.

11. The assembling method of a driving belt as claimed in claim 9 or 10, wherein:
the two rows of rings aligned parallel to each other is overlapped partially by a pivotal movement of the element accommodating the rings in its recess with respect to the adjoining element.
